# EUROPÄISCHE PATENTSCHRIFT

(11) **EP 2 589 528 B1**
(45) Veröffentlichungstag und Bekanntmachung des Hinweises auf die Patenterteilung: **05.10.2016**
(21) Anmeldenummer: 12187554.6
(22) Anmeldetag: 08.10.2012
(51) Int. Cl.: B62J 13/04, B62K 11/04, B62K 25/00, B62K 25/28, B62M 7/02, F02B 61/02, B62K 25/20

(54) **Motorroller**
Motorised scooter
Scooter

(30) Priorität: 02.11.2011 DE 102011085588
(43) Veröffentlichungstag der Anmeldung: 08.05.2013
(73) Patentinhaber: Bayerische Motoren Werke Aktiengesellschaft, 80809 München (DE)
(72) Erfinder: Ringholz, Thomas, 82481 Mittenwald (DE); Blümelhuber, Uli, 80995 München (DE)

(56) Entgegenhaltungen:
- EP-A1- 1 547 913
- EP-A2- 0 960 808
- DE-A1- 10 051 764
- DE-U- 1 856 874
- FR-A- 1 030 048
- JP-A- 1 122 789
- JP-A- 1 317 889
- JP-A- H07 117 774
- JP-A- 2009 166 798
- US-A- 3 939 730
- US-A- 4 469 188
- US-A1- 2008 169 134

## Beschreibung

Die vorliegende Erfindung betrifft einen Motorroller gemäß dem Oberbegriff des Patentanspruches 1.

Ein derartiger Motorroller ist aus der US 4 469 188 A bekannt. Zum technischen Hintergrund der Erfindung zählen die JP 1122789 A, DE 100 51 764 A1, JP 1 317 889 A, US 3 939 730 A, JP 2009 166798 A, EP 1 547 913 A1, US 2008/0169134 A1, EP 0960 808 A2, JPH07117774A sowie die DE 18 56 874 U.

Aus der EP 1 743 832 B1 ist ein Motorrad bekannt, welches eine Motor-/Getriebeeinheit mit einem Getriebeausgangsritzel aufweist, das koaxial zur Schwenkachse der Hinterradschwinge des Motorrads angeordnet ist. Das Getriebeausgangsritzel ist über eine Antriebskette mit einem am Hinterrad vorgesehenen Kettenrad verbunden. Dieser Kettentrieb kann als "Sekundärtrieb", welcher das Getriebe mit dem Hinterrad koppelt, bezeichnet werden. Aufgrund der Koaxialität von Hinterradschwingenachse und Getriebeausgangsritzel wird vermieden, dass sich die Spannung der Kette beim Ein- bzw. Ausfedern der Hinterradschwinge verändert. Da die Kette bei dem in der EP 1 743 832 B1 beschriebenen Motorrad frei läuft, ist sie den Umwelteinflüssen ungeschützt ausgesetzt und muss daher regelmäßig geschmiert werden.

Aufgabe der Erfindung ist es, einen Motorroller zu schaffen, dessen Sekundärtrieb kompakt aufgebaut und möglichst wartungsfrei ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Motorroller, mit einem Rahmen und einem an dem Rahmen befestigten Motor. Der Begriff Motorroller ist breit im Sinne eines motorisierten, zwei- oder dreirädrigen Fahrzeugs auszulegen. Unter einem Motorroller wird in Abgrenzung zu einem Motorrad ein motorisiertes Zweirad verstanden, das einen Rahmen mit einem relativ tief liegenden "Durchstieg" und ggf. eine Fußauflage aufweist, auf der der Fahrer seine Füße abstellen kann. Eine Fußauflage, auf der beide Füße abgestellt werden können, muss aber nicht unbedingt vorgesehen sein.

Der Motor treibt mittelbar oder unmittelbar ein "Antriebsritzel" an, welches über ein "Zugmittel" mit einem "Antriebsrad" gekoppelt ist. Das Antriebsrad ist auf einer Antriebswelle eines Hinterrads des Motorrollers angeordnet.

Bei dem Zugmittel, über welches das Antriebsritzel mit dem Antriebsrad gekoppelt ist, kann es sich z. B. um eine Kette, einen Zahnriemen, einen Reibradriemen o. ä. handeln. Dementsprechend kann es sich bei dem Antriebsritzel und bei dem Antriebsrad um Kettenräder, Zahnräder, Reibräder o. ä. handeln.

Der Motor ist im Wesentlichen fest befestigt am Rahmen. "Fest befestigt" bedeutet in diesem Zusammenhang, dass er anders als bei vielen herkömmlichen Motorrollern nicht schwenkbar in Bezug auf einen Rahmen des Fahrzeugs angeordnet ist. Bei herkömmlichen Rollern mit sogenannter "Triebsatzschwinge" ist der Motor nämlich gerade nicht "fest" am Rahmen des Fahrzeugs, sondern (fest) an der Schwinge befestigt und bewegt sich dementsprechend beim Ein- bzw. Ausfedern der Hinterradschwinge relativ zum Rahmen mit dieser mit. "Fest befestigt" kann gemäß der vorliegenden Erfindung aber sehr wohl bedeuten, dass der Motor über elastische Lager, wie z. B. Gummilager, mit dem Rahmen verbunden ist.

Der Motor bzw. eine Antriebswelle des Motors könnte das Antriebsritzel zwar unmittelbar antreiben. Gemäß der Erfindung ist jedoch eine Antriebswelle des Motors über ein mehrgängiges Getriebe mit dem Antriebsritzel verbunden. In diesem Fall bildet das Antriebsritzel ein Ausgangsritzel des Getriebes (Getriebeausgangsritzel).

Der Motorroller weist ferner eine Hinterradschwinge auf, welche über Lager schwenkbar um eine Schwenkachse an dem Rahmen gelagert ist. Die Schwenkachse der Hinterradschwinge ist koaxial zur Drehachse des Antriebsritzels. Wie einleitend bereits erwähnt, hat dies den Vorteil, dass ein Ein- bzw. Ausfedern (Verschwenken) der Hinterradschwinge keinen Einfluss auf die Spannung des Zugmittels hat.

Ein wesentlicher Gedanke der Erfindung besteht darin, dass die Hinterradschwinge einen Schwingenkasten bildet, in dem das Zugmittel läuft. Das Zugmittel ist dadurch wesentlich besser vor Umwelteinflüssen geschützt, als bei dem eingangs erwähnten Stand der Technik. Der "Sekundärtrieb", welcher das Antriebsrad mit dem Antriebsritzel koppelt, ist daher nahezu wartungsfrei.

Nach einer Weiterbildung der Erfindung ist der gesamte Sekundärtrieb, d. h. das Antriebsritzel, das Zugmittel und das Antriebsrad in dem Schwingenkasten untergebracht. Der Schwingenkasten ist zumindest teilweise mit Öl befüllt, was den Vorteil hat, dass der gesamte Sekundärtrieb permanent geschmiert wird.

In Bezug auf die Welle, auf der das Antriebsritzel gelagert ist, kann der Schwingenkasten durch einen Wellendichtring öldicht abgedichtet sein. Bei dieser Welle kann es sich um eine Getriebeausgangwelle handeln, sofern das Antriebsritzel durch ein Getriebeausgangsritzel gebildet ist.

Vorzugsweise handelt es sich bei der Hinterradschwinge um eine Einarmschwinge. Die Einarmschwinge kann über ein linkes und ein rechtes Schwingenlager am Rahmen gelagert sein. Die Einarmschwinge ist als Gussteil, z. B. als Druckguss- bzw. Kokillengussteil ausgeführt und z. B. aus einer Aluminium- oder einer anderen Leichtmetalllegierung hergestellt.

Die Hinterradschwinge kann über eine sogenannte "durchgehende Schwingenachse" im bzw. am Rahmen gelagert sein. Eine "durchgehende Schwingenachse" zeichnet sich dadurch aus, dass sich die Schwingenachse von einem auf einer linken Rahmenseite angeordneten Schwingenlager bis zu einem auf einer rechten Rahmenseite angeordneten Schwingenlager erstreckt. Die Hinterradschwinge ist gemäß der Erfindung über eine Klemmverbindung an bzw. auf der Schwingenachse festgeklemmt.

Im Bereich der Klemmverbindung kann die Hinterradschwinge zweiteilig ausgeführt sein, wobei die beiden Teile z. B. durch Schraubverbindungen zusammengeklemmt sind und die Schwingenachse zwischen sich einklemmen.

Alternativ dazu kann die Hinterradschwinge auch über einen linken und einen rechten Lagerbolzen mit einem auf einer linken Rahmenseite vorgesehenen Lager und über einen rechten Lagerbolzen mit einem auf einer rechten Seite des Rahmens vorgesehenen Lager verbunden sein.

Bei dem Motor kann es sich um einen Verbrennungsmotor oder aber auch um einen Elektromotor handeln. Der Motor kann zusammen mit einem Mehrganggetriebe in einem gemeinsamen Gehäuse (Motor-/Getriebegehäuse) untergebracht sein.

Nach einer Weiterbildung der Erfindung weist das Getriebe eine hohle Getriebeausgangswelle auf. Auf der hohlen Getriebeausgangswelle kann das Antriebsritzel als "Getriebeausgangsritzel" angeordnet sein. Bei der Variante, bei der die Schwinge über eine durchgehende Schwingenachse schwenkbar am Rahmen gelagert ist, kann vorgesehen sein, dass sich die Schwingenachse durch die hohle Getriebeausgangswelle hindurch erstreckt.

Im Folgenden wird die Erfindung im Zusammenhang mit der Zeichnung näher erläutert. Es zeigen:
- Figur 1: eine Schnittdarstellung eines Motorrollers gemäß der Erfindung; und
- Figur 2: eine perspektivische Darstellung eines Sekundärtriebs eines Motorrollers.

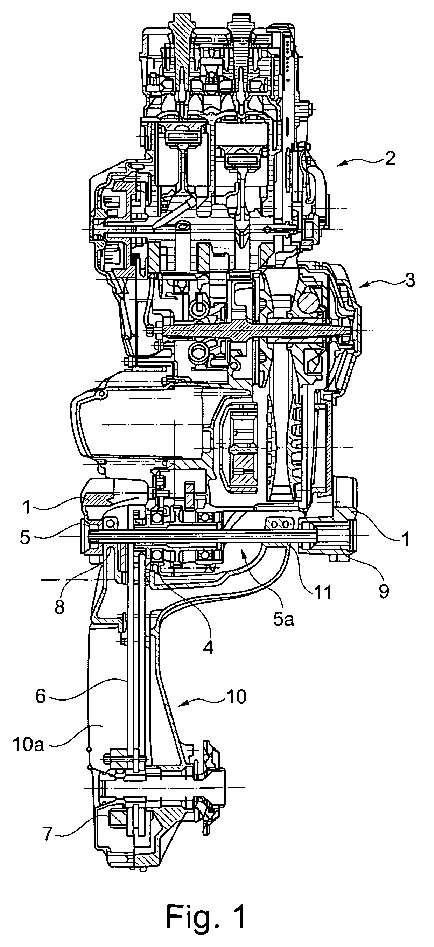

Figur 1 zeigt einen Teil eines hier nicht näher dargestellten Motorrollers mit einem Rahmen 1, einem in hier nicht näher dargestellter Weise am Rahmen 1 befestigten Motor 2, dessen Kurbelwelle über ein Getriebe 3 eine Getriebeausgangswelle 4 antreibt, auf der ein Getriebeausgangsritzel 5 sitzt. Das Getriebeausgangsritzel 5 ist über eine Kette 6 mit einem Antriebsrad 7 gekoppelt, welches ein hier nicht näher dargestelltes Hinterrad des Motorrads antreibt.

Wie aus Figur 1 ersichtlich ist, ist die Getriebeausgangswelle 4 als Hohlwelle ausgebildet. Durch die Getriebeausgangswelle 4 hindurch erstreckt sich eine Schwingenachse 5a, die über ein linkes Schwingenlager 8 und ein rechtes Schwingenlager 9 schwenkbar an bzw. in dem Rahmen 1 gelagert ist. Die Schwingenachse 5a ist somit konzentrisch zu dem Getriebeausgangsritzel 5 bzw. zu der Getriebeausgangswelle 4 angeordnet.

Der durch das Getriebeausgangsritzel 5, das Zugmittel 6 und das Antriebsrad 7 gebildete Sekundärtrieb kann vollständig innerhalb eines durch eine Hinterradschwinge 10 gebildeten Schwingenkastens 10a untergebracht sein. Der Schwingenkasten 10a ist teilweise mit Öl befüllt.

Die Hinterradschwinge 10 ist in einem linken und einem rechten Bereich der Schwingenachse 5a jeweils über eine Klemmverbindung auf die Schwingenachse 5a aufgeklemmt. Mit einem Bezugszeichen gekennzeichnet ist hier lediglich eine rechte Klemmverbindung 11.

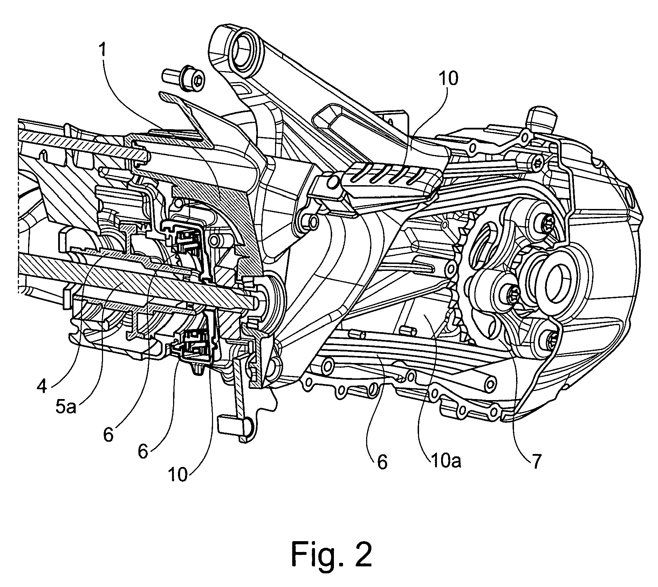

Figur 2 zeigt eine perspektivische Darstellung eines teilweise aufgeschnitten Sekundärtriebs eines Motorrads gemäß der Erfindung. Deutlich zu erkennen ist der Schwingenkasten 10a der Hinterradschwinge 10. In dem Schwingenkasten 10a sind das Antriebsrad 7, die Kette 6 und ein hier nicht dargestelltes, die Kette 6 antreibendes Getriebeausgangsritzel (vgl. Figur 1) angeordnet.

Deutlich zu erkennen ist, dass sich die Schwingenachse 5a, die auch als "Steckachse" bezeichnet werden kann, durch die als Hohlwelle ausgebildete Getriebeausgangswelle von einer linken Rahmenseite zu einer rechten Rahmenseite des hier nicht näher dargestellten Motorrads erstreckt. Über die beiden Lager 8, 9 (vgl. Figur 1) ist die Schwingenachse 5a (und somit die Hinterradschwinge 10) schwenkbar in Bezug auf den Rahmen gelagert.

## Patentansprüche

1. Motorroller, mit
- einem Rahmen (1),
- einem an dem Rahmen (1) befestigten Motor (2),
- einem mittelbar von dem Motor (2) antreibbaren Antriebsritzel (5), das über ein Zugmittel (6) mit einem Antriebsrad (7) gekoppelt ist, und
- einer Hinterradschwinge (10), welche über Lager (8, 9) schwenkbar um eine Schwenkachse an dem Rahmen (1) gelagert ist, wobei die Schwenkachse der Hinterradschwinge (10) koaxial zu einer Drehachse des Antriebsritzels (5) angeordnet ist, wobei das Zugmittel (6) in einem Schwingenkasten (10a) der Hinterradschwinge (10) läuft,
• wobei die Hinterradschwinge (10) über eine Schwingenachse (5a) im bzw. am Rahmen gelagert ist, wobei sich die Schwingenachse (5a) von einem linken Schwingenlager (8) bis zu einem rechten Schwingenlager erstreckt und
• der Motor (2) über ein Getriebe (3), welches eine hohle Getriebeausgangswelle aufweist, das Antriebsritzel antreibt, wobei sich die Schwingenachse (5a) durch die hohle Getriebeausgangswelle (4) hindurch erstreckt,
**dadurch gekennzeichnet, dass**
• der Schwingenkasten (10a) teilweise mit Öl befüllt ist,
• das Getriebe (3) ein mehrgängiges Getriebe ist,
• die Hinterradschwinge (10) als Gussteil ausgebildet ist und
• die Hinterradschwinge (10) über mindestens eine Klemmverbindung (11) auf die Schwingenachse (5a) aufgeklemmt ist.

2. Motorroller nach Anspruch 1, **dadurch gekennzeichnet, dass** das Antriebsritzel (5) und das Antriebsrad (7) ebenfalls in dem Schwingenkasten (10a) untergebracht sind.

3. Motorroller nach Anspruch 1 oder 2, **dadurch gekennzeichnet, dass** das Antriebsrad (7) auf einer Antriebswelle eines Hinterrads des Motorrollers angeordnet ist.

4. Motorroller nach einem der Ansprüche 1 bis 3, **dadurch gekennzeichnet, dass** es sich bei der Hinterradschwinge (10) um eine Einarmschwinge handelt.

5. Motorroller nach einem der Ansprüche 1 bis 4, **dadurch gekennzeichnet, dass** die Hinterradschwinge (10) über einen linken Lagerbolzen mit einem linken Lager und über einen rechten Lagerbolzen mit einem rechten Lager im bzw. am Rahmen (1) gelagert ist.

6. Motorroller nach einem der Ansprüche 1 bis 5, **dadurch gekennzeichnet, dass** es sich bei dem Zugmittel (6) um eine Kette oder um einen Zahnriemen handelt.

7. Motorroller nach einem der Ansprüche 1 bis 6, **dadurch gekennzeichnet, dass** es sich bei dem Motor um einen Verbrennungsmotor oder um einen Elektromotor handelt.

8. Motorroller nach einem der Ansprüche 1 bis 7, **dadurch gekennzeichnet, dass** es sich bei dem Motor um einen Verbrennungsmotor handelt, der zusammen mit einem Getriebe (3) in einem gemeinsamen Gehäuse untergebracht ist.

## Claims

1. A motor scooter, comprising
- a frame (1),
- a motor (2) which can be fastened to the frame (1),
- a drive pinion (5) which can be driven indirectly by the motor (2) and is coupled to a drive wheel (7) by a traction means (6), and
- a rear wheel rocker (10) which is mounted by bearings (8, 9) on the frame (1) such that it can swivel about a swivel axis, wherein the swivel axis of the rear wheel rocker (10) is arranged coaxially to a rotational axis of the drive pinion (5), wherein the traction means (6) runs in a rocker case (10a) of the rear wheel rocker (10),
• wherein the rear wheel rocker (10) is mounted in or on the frame by a rocker spindle (5a), the rocker spindle (5a) extending from a left rocker bearing (8) to a right rocker bearing, and
• the motor (2) drives the drive pinion via a transmission (3) which has a hollow transmission output shaft, the rocker spindle (5a) extending through the hollow transmission output shaft (4),
**characterised in that**
• the rocker case (10a) is partly filled with oil,
• the transmission (3) is a multiple gear transmission,
• the rear wheel rocker (10) is formed as a cast part, and
• the rear wheel rocker (10) is clamped onto the rocker spindle (5a) by at least one clamping connection (11).

2. A motor scooter according to claim 1, **characterised in that** the drive pinion (5) and the drive wheel (7) are also accommodated in the rocker case (10a).

3. A motor scooter according to claim 1 or claim 2, **characterised in that** the drive wheel (7) is arranged on a drive shaft of a rear wheel of the motor scooter.

4. A motor scooter according to any one of claims 1 to 3, **characterised in that** the rear wheel rocker (10) is a single-armed rocker.

5. A motor scooter according to any one of claims 1 to 4, **characterised in that** the rear wheel rocker (10) is mounted in or on the frame (1) by a left bearing bolt with a left bearing and by a right bearing bolt with a right bearing.

6. A motor scooter according to any one of claims 1 to 5, **characterised in that** the traction means (6) is a chain or a toothed belt.

7. A motor scooter according to any one of claims 1 to 6, **characterised in that** the motor is an internal combustion engine or an electric motor.

8. A motor scooter according to any one of claims 1 to 7, **characterised in that** the motor is an internal combustion engine which is accommodated together with a transmission (3) in a common housing.

## Revendications

1. Scooter comportant
- un châssis (1),
- un moteur (2) fixé au châssis (1),
- un pignon d'entraînement (5) entraîné indirectement par le moteur (2), ce pignon étant couplé à une roue motrice (7) par un moyen de traction (6), et
- un bras oscillant (10) de roue arrière qui est monté pivotant par un palier (8, 9) autour d'un axe de pivotement sur le châssis (1), l'axe de pivotement du bras oscillant (10) étant coaxial à l'axe de rotation du pignon d'entraînement (5), le moyen de traction (6) passant dans le boîtier (10a) du bras oscillant (10),
* le bras oscillant (10) étant monté dans ou sur le châssis par l'intermédiaire d'un axe de pivotement (5a), cet axe (5a) s'étendant du palier gauche (8) du bras jusqu'au palier droit du bras, et
* le moteur (2) est entraîné par une transmission (3) qui a un arbre de sortie de transmission, creux, pour entraîner le pignon d'entraînement, l'axe d'oscillation (5a) traversant l'arbre de sortie de transmission (4),
scooter **caractérisé en ce que**
* le boîtier du bras (10a) est partiellement rempli d'huile,
* la transmission (3) est une transmission à plusieurs rapports,
- le bras oscillant (10) est une pièce de fonte, et
* le bras oscillant (10) est serré par au moins une liaison serrée (11) sur l'axe de pivotement (5a).

2. Scooter selon la revendication 1,
**caractérisé en ce que**
le pignon d'entraînement (5) et la roue motrice (7) sont également logés dans le boîtier oscillant (10a).

3. Scooter selon la revendication 1 ou 2,
**caractérisé en ce que**
la roue motrice (7) est montée sur l'arbre d'entrainement de la roue arrière du scooter.

4. Scooter selon l'une des revendications 1 à 3,
**caractérisé en ce que**
le bras oscillant (10) est un mono-bras oscillant.

5. Scooter selon l'une des revendications 1 à 4,
**caractérisé en ce que**
le bras oscillant (10) est monté dans ou sur le châssis (1) par l'intermédiaire d'un goujon de palier gauche sur un palier gauche et par l'intermédiaire d'un goujon de palier droit sur un palier droit.

6. Scooter selon l'une des revendications 1 à 5,
**caractérisé en ce que**
le moyen de traction (6) est une chaîne ou une courroie crantée.

7. Scooter selon l'une des revendications 1 à 6,
**caractérisé en ce que**
le moteur est un moteur à combustion interne ou un moteur électrique.

8. Scooter selon l'une des revendications 1 à 7,
**caractérisé en ce que**
le moteur est un moteur à combustion interne logé avec la transmission (3) dans un boîtier commun.
